# EUROPÄISCHE PATENTSCHRIFT

(11) **EP 3 555 460 B1**
(45) Veröffentlichungstag und Bekanntmachung des Hinweises auf die Patenterteilung: **20.10.2021**
(21) Anmeldenummer: 17811598.6
(22) Anmeldetag: 11.12.2017
(51) Int. Cl.: F03D 7/02

(54) **WINDENERGIEANLAGE UND VERFAHREN ZUM STARTEN EINER WINDENERGIEANLAGE**
WIND ENERGY SYSTEM AND METHOD FOR STARTING A WIND ENERGY SYSTEM
SYSTÈME D'ÉNERGIE ÉOLIENNE ET PROCÉDÉ DE DÉMARRAGE D'UN SYSTÈME D'ÉNERGIE ÉOLIENNE

(30) Priorität: 13.12.2016 DE 102016015133
(43) Veröffentlichungstag der Anmeldung: 23.10.2019
(73) Patentinhaber: Siemens Gamesa Renewable Energy Service GmbH, 22297 Hamburg (DE)
(72) Erfinder: RAUTENSTRAUCH, Arne, 24943 Flensburg (DE); AUGART, Nicolas, 24943 Flensburg (DE)
(74) Vertreter: Glawe, Delfs, Moll
(86) Internationale Anmeldenummer: PCT/EP2017/082188
(87) Internationale Veröffentlichungsnummer: WO 2018/108795

(56) Entgegenhaltungen:
- EP-A1- 2 910 777

## Beschreibung

Die Erfindung betrifft ein Verfahren zum Starten einer Windenergieanlage sowie eine zum Durchführen des Verfahrens geeignete Windenergieanlage.

Es muss eine bestimmte Mindest-Energiemenge aus dem Wind zur Verfügung stehen, bevor eine Windenergieanlage in Betrieb gesetzt werden kann. In der Windenergieanlage ist deswegen üblicherweise ein Start-Schwellwert hinterlegt, bei dessen Überschreiten ein Startversuch unternommen wird. Für die Ertragskraft einer Windenergieanlage ist es von Vorteil, den Start-Schwellwert niedrig anzusetzen, so dass bei einem Auffrischen des Winds möglichst frühzeitig ein Start-Versuch eingeleitet werden kann. Allerdings steigt mit sinkendem Start-Schwellwert die Wahrscheinlichkeit fehlerhafter Startversuche an. Es wird also ein Versuch unternommen, die Windenergieanlage in Betrieb zu setzen, der nicht gelingt. Solche fehlerhaften Startversuche können zu einem verstärkten Verschleiß der Windenergieanlage beitragen.

Bekannt sind Windenergieanlagen, bei denen ein Kriterium für die Inbetriebnahme einer Windenergieanlage abhängig von den Erfahrungen aus früheren Startversuchen (DE 10 2007 014 863 A1) oder abhängig von aktuellen Zustandsparametern der Windenergieanlage (EP 2 840 257 A1, DE 10 2009 025 445 B3) ermittelt wird. EP2910777 bezieht sich auf eine Windenergieanlage und ein Steuerungsverfahren für eine Windturbine.

Der Erfindung liegt die Aufgabe zugrunde, eine Windenergieanlage und ein zugehöriges Verfahren vorzustellen, sodass einerseits eine hohe Ertragskraft der Windenergieanlage gewährleistet ist, während andererseits das Risiko fehlerhafter Startversuche gering gehalten wird. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren wird ein die aktuelle Windrichtung umfassender Sektor aus einer Sektorenmehrzahl ausgewählt, wobei für den Sektor ein von anderen Sektoren aus der Sektorenmehrzahl abweichender Start-Schwellwert festgelegt ist. Ein Zustandsparameter der Windenergieanlage wird mit dem Start-Schwellwert verglichen. Überschreitet der Zustandsparameter der Windenergieanlage den Start-Schwellwert, so wird ein Startversuch der Windenergieanlage eingeleitet.

Mit dem erfindungsgemäßen Verfahren wird es möglich, an bestimmte Windrichtungen angepasste Schwellwerte zu definieren, durch die ein Startversuch der Windenergieanlage ausgelöst wird. Die Erfindung hat erkannt, dass ein für alle Windrichtungen einheitlicher Start-Schwellwert den tatsächlichen Gegebenheiten in vielen Fällen nicht gerecht wird. So macht es beispielsweise für die Erfolgsaussichten eines Startversuchs einen erheblichen Unterschied, ob die Windenergieanlage bei der aktuellen Windrichtung frei angeströmt wird oder ob sie durch einen Berg oder eine benachbarte Windenergieanlage abgeschattet ist. Indem für verschiedene Sektoren der Windrichtung jeweils angepasste Start-Schwellwerte festgelegt werden können, vermindert sich das Risiko, dass bei einer bestimmten Windrichtung die Startversuche immer wieder scheitern. Gleichzeitig kann die Ertragskraft der Windenergieanlage gefördert werden, indem der Start-Schwellwert für Windrichtungen mit guter Anströmung niedriger angesetzt werden kann.

Die Sektoren können so definiert sein, dass sie einem Sektor von auf die Windenergieanlage eintreffenden Windrichtungen entsprechen. In ihrer Gesamtheit können die Sektoren der Sektorenmehrzahl alle auf die Windenergieanlage eintreffenden Windrichtungen umfassen. Für jeden Sektor aus der Sektorenmehrzahl kann ein Start-Schwellwert festgelegt sein, wobei es innerhalb der Sektorenmehrzahl wenigstens zwei verschiedene Start-Schwellwerte gibt. Vorzugsweise bildet die Sektorenmehrzahl in ihrer Gesamtheit einen Vollkreis, dessen Mittelpunkt mit dem Standort der Windenergieanlage übereinstimmt.

Durch den Start-Schwellwert wird ein Zustand definiert, bei dessen Erreichen ein Startversuch der Windenergieanlage ausgelöst wird. In Form des Zustandsparameters wird in dem Verfahren eine Information über den aktuellen Zustand der Windenergieanlage verarbeitet. Der Zustandsparameter und der Start-Schwellwert sind so aufeinander bezogen, dass durch einen Vergleich festgestellt werden kann, ob der Zustandsparameter den Start-Schwellwert überschreitet. Ein Startversuch wird eingeleitet, sobald der durch den Zustandsparameter definierte aktuelle Zustand der Windenergieanlage dies zulässt.

Der Zustandsparameter der Windenergieanlage kann sich auf eine Umgebungsbedingung der Windenergieanlage beziehen. Insbesondere kann der Zustandsparameter ein Parameter des Winds sein. Neben der Windgeschwindigkeit gehören zu den Windparametern die Luftdichte, der Luftmassenstrom, die Lufttemperatur, die Scherung in horizontaler Richtung bzw. vertikaler Richtung.

Möglich ist auch, dass der Zustandsparameter einem Betriebsparameter der Windenergieanlage entspricht. Insbesondere kann der Zustandsparameter die Drehzahl des Rotors repräsentieren oder einen Pitchwinkel der Rotorblätter, der zum Erreichen einer bestimmten Drehzahl eingestellt wird. Die Drehzahl des Rotors bzw. eine mit der Drehzahl zusammenhängende Einstellung der Windenergieanlage können für sich genommen ein Kriterium für die Erfolgsaussichten eines Startversuchs bilden. Möglich ist auch, den Zustandsparameter der Windenergieanlage so zu definieren, dass er sowohl einen Windparameter als auch einen Betriebsparameter der Windenergieanlage einbezieht.

Der Start-Schwellwert kann als Einzelkriterium ausgestaltet sein, was bedeutet, dass lediglich eine einzelne Größe als Zustandsparameter mit dem Start-Schwellwert verglichen wird. Möglich ist auch, den Start-Schwellwert als Kombinationskriterium auszugestalten. Das Kombinationskriterium kann beispielsweise derart gestaltet sein, dass eine erste Größe eine erste Bedingung erfüllt und eine zweite Größe eine zweite Bedingung erfüllt, bevor ein Startversuch eingeleitet wird. So kann beispielsweise als Start-Schwellwert ein bestimmter Schwellwert für die Windgeschwindigkeit in Kombination mit einem bestimmten Schwellwert für die Luftdichte oder die Temperatur festgelegt sein. Ein Start-Schwellwert kann eine Mehrzahl von Bedingungskombinationen umfassen, beispielsweise indem ein Startversuch sowohl bei etwas höherer Windgeschwindigkeit und niedrigerer Luftdichte als auch bei etwas niedrigerer Windgeschwindigkeit und höherer Luftdichte eingeleitet werden kann.

Ein Startversuch der Windenergieanlage kann eingeleitet werden, indem an der Windenergieanlage eine Einstellung vorgenommen wird mit dem Ziel, die Windenergieanlage in einen Zustand zu bringen, in dem sie elektrische Energie in ein Anschlussnetz einspeisen kann. Dem Einspeisen elektrischer Energie kann eine Phase des Startversuchs vorausgehen, in der versucht wird, die Windenergieanlage auf eine ausreichende Rotordrehzahl zu beschleunigen. Nicht als Startversuch gilt ein Zustand, in dem die Windenergieanlage auf bessere Windbedingungen wartet und sich dabei ggf. im Leerlauf dreht.

Ein Startversuch der Windenergieanlage kann dadurch eingeleitet werden, dass Einstellungen an der Windenergieanlage vorgenommen werden mit dem Ziel, den Rotor auf eine Drehzahl zu beschleunigen, ab der ein Einspeisen elektrischer Energie möglich ist. Insbesondere kann der Pitchwinkel der Rotorblätter so variiert werden, dass der Rotor beschleunigt wird. Es ist möglich, zu diesem Zweck einen Pitchregler zu aktivieren. Das Aktivieren des Pitchreglers kann in diesem Fall als Zeitpunkt gelten, ab dem von einem Starten der Windenergieanlage gesprochen wird. Vor Beginn des Startversuchs kann der Rotor im Stillstand sein. Möglich ist auch, dass der Rotor vor Beginn des Startversuchs im Leerlauf dreht, wobei die Rotorblätter einen festen Anstellwinkel von beispielsweise 45° haben können.

Ob ein Startversuch erfolgreich ist, kann anhand eines geeigneten Kriteriums ermittelt werden. Beispielsweise kann ein Startversuch als erfolgreich gewertet werden, wenn die Windenergieanlage mit dem Einspeisen elektrischer Energie beginnt oder wenn die Windenergieanlage elektrisch mit dem Anschlussnetz gekoppelt wird. Möglich ist auch, das Kriterium für einen erfolgreichen Startversuch so zu definieren, dass ein Startversuch dann als erfolgreich gewertet wird, wenn die Windenergieanlage über eine bestimmte Mindest-Zeitspanne elektrische Energie eingespeist hat, oder wenn die Windenergieanlage eine bestimmte Mindestmenge an elektrischer Energie erzeugt hat. Vorteil der beiden letztgenannten Kriterien ist, dass ein einmaliges Beschleunigen nicht direkt als erfolgreicher Start verbucht wird. Nach einem erfolgreichen Startversuch geht die Windenergieanlage in den regulären Betrieb über. Ein Startversuch, der beendet wird, ohne dass das Kriterium für einen erfolgreichen Startversuch erfüllt wurde, wird als fehlgeschlagener Startversuch bezeichnet. Im Anschluss an einen fehlgeschlagenen Startversuch ist die Windenergieanlage normalerweise in einem Zustand, in dem sie auf bessere Windbedingungen wartet.

Die Sektorenmehrzahl kann in einem Speicher hinterlegt sein. Das Auswählen eines Sektors kann dadurch erfolgen, dass ein Messwert über die aktuelle Windrichtung ermittelt wird und ein automatischer Vergleich zwischen der Windrichtung und den Sektoren aus der Sektorenmehrzahl vorgenommen wird. Die Sektoren sind vorzugsweise so definiert, dass jede Windrichtung in genau einen Sektor aus der Sektorenmehrzahl fällt. Der zu dem betreffenden Sektor gehörige Start-Schwellwert wird aus dem Speicher ausgelesen und als Kriterium für das Auslösen eines Startversuchs herangezogen.

Die Sektoren der Sektorenmehrzahl können fest in dem Speicher hinterlegt sein. Möglich ist auch eine Gestaltung des Speichers, bei der die Segmente innerhalb vorgegebener Randbedingungen frei definierbar sind. So kann beispielsweise durch einen Benutzer festgelegt werden, welche Anzahl von Sektoren die Sektorenmehrzahl umfasst. Die Anzahl kann beispielsweise zwischen 2 und 10, vorzugsweise zwischen 4 und 8 liegen. Zusätzlich oder alternativ dazu können die Grenzen zwischen zwei benachbarten Sektoren durch einen Benutzer definiert werden.

Die den Sektoren zugeordneten Start-Schwellwerte können ebenfalls entweder fest voreingestellt oder durch einen Benutzer definierbar sein. Außerdem ist möglich, dass die Start-Schwellwerte im Betrieb der Windenergieanlage optimiert werden. Dazu kann bezogen auf einen Sektor aus der Sektorenmehrzahl ermittelt werden, in welchem Verhältnis bei dem gegenwärtigen Start-Schwellwert erfolgreiche Startversuche zu fehlgeschlagenen Startversuchen stehen. Sinkt das Verhältnis unter einem vorgegebenen ersten Grenzwert ab, so kann der Start-Schwellwert erhöht werden, sodass eine geringere Anzahl von Startversuche erfolgt. Der vorgegebene erste Grenzwert kann beispielsweise zwischen 50 % und 80 % liegen. Steigt das Verhältnis über einen vorgegebenen zweiten Grenzwert an, so kann der Start-Schwellwert abgesenkt werden, sodass eine größere Anzahl von Startversuchen erfolgt. Der zweite vorgegebene Grenzwert kann beispielsweise zwischen 70 % und 95 % liegen. Das Verhältnis zwischen erfolgreichen Startversuchen und fehlgeschlagenen Startversuche kann anhand einer bestimmten Anzahl von Startversuchen aus dem betreffenden Sektor ermittelt werden. Die Anzahl der berücksichtigten Startversuche kann beispielsweise zwischen 5 und 20 liegen, wobei es sich bei den Startversuchen vorzugsweise um die zuletzt durchgeführten Startversuche handelt. Eine solche Optimierung kann für einen oder mehrere Sektoren, vorzugsweise für alle Sektoren aus der Sektorenmehrzahl durchgeführt werden.

Die Erfindung betrifft außerdem eine zum Durchführen des Verfahrens geeignete Windenergieanlage. Die Windenergieanlage umfasst einen Speicher, in dem eine Mehrzahl von Sektoren hinterlegt ist und in dem für jeden der Sektoren ein Start-Schwellwert hinterlegt ist. Die Windenergieanlage umfasst ein Startermodul, das anhand eines Messwerts über die aktuelle Windrichtung einen Sektor aus der Sektorenmehrzahl auswählt und einen Zustandsparameter der Windenergieanlage mit dem Start-Schwellwert des Sektors vergleicht und das einen Steuerbefehl zum Einleiten eines Startversuchs auslöst, sobald der Zustandsparameter den Start-Schwellwert überschreitet. Windenergieanlage im Sinne der Erfindung bezeichnet eine Vorrichtung, bei der ein Rotor mechanisch mit einem Generator gekoppelt ist.

Die Windenergieanlage kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang der erfindungsgemäßen Windenergieanlage beschrieben sind.

Die Erfindung wird nachfolgend unter Bezugnahme auf die beigefügten Zeichnungen anhand fortlaufender Ausführungsformen beispielhaft beschrieben. Es zeigen:
- Fig. 1:: eine schematische Darstellung einer erfindungsgemäßen Windenergieanlage;
- Fig. 2:: die Windenergieanlage aus Fig. 1 in einer typischen Einsatzumgebung;
- Fig. 3:: eine Ansicht von oben auf die Windenergieanlage;
- Fig. 4:: eine schematische Darstellung einer erfindungsgemäßen Windenergieanlage;
- Fig. 5:: eine schematische Darstellung einer Variante des erfindungsgemäßen Verfahrens.

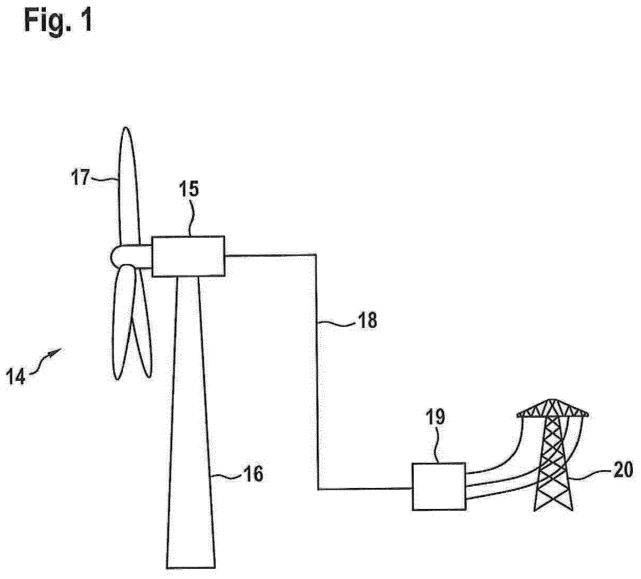

Eine in Fig. 1 gezeigte Windenergieanlage 14 umfasst eine Gondel 15, die drehbar auf einem Turm 16 angeordnet ist. Ein Rotor 17 der Windenergieanlage 14 ist mit einer Rotorwelle verbunden, die drehbar in der Gondel 15 gelagert ist. Mit der Rotorwelle wird gegebenenfalls über ein Getriebe ein Generator angetrieben. Die mit dem Generator erzeugte elektrische Energie wird über ein windparkinternes Netz 18 zu einer Übergabestation 19 geleitet, wo die Einspeisung in ein Übertragungsnetz 20 vorgenommen wird.

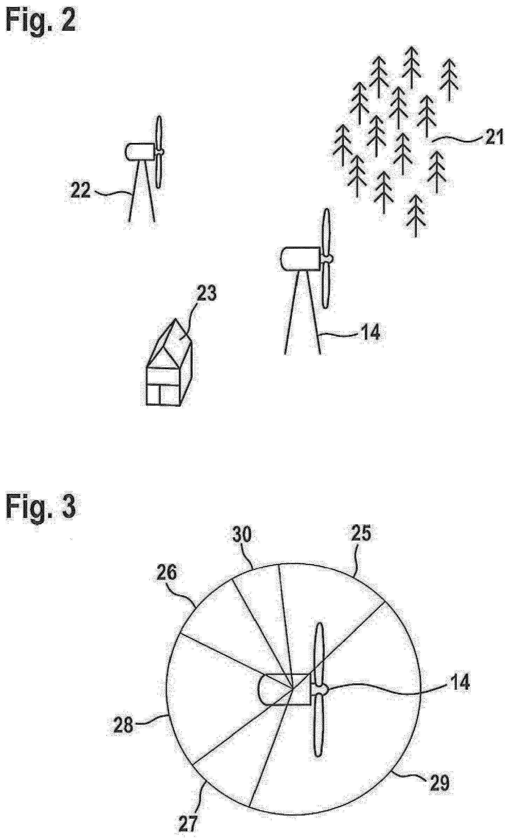

Die Fig. 2 zeigt eine typische Einsatzumgebung der Windenergieanlage 14. In der näheren Umgebung der Windenergieanlage 14 gibt es einen Wald 21, eine weitere Windenergieanlage 22 und ein Gebäude 23. Wenn der Wind aus den betreffenden Richtungen kommt, wird die Windenergieanlage 14 nicht frei angeströmt sondern wird durch die jeweiligen Einrichtungen abgeschattet. Daneben gibt es andere Sektoren, in denen die Windenergieanlage einer freien Anströmung unterliegt.

Um in Betrieb gesetzt werden zu können, muss die Windenergieanlage eine bestimmte Menge Energie aus dem Wind entnehmen können. Als Maß für die durch den Wind bereitgestellte Energie dient im Allgemeinen in erster Linie die Windgeschwindigkeit. Auf der Gondel der Windenergieanlage kann eine Messvorrichtung für die Windgeschwindigkeit angeordnet sein, mit der betreffende Messwerte für die Steuerung der Windenergieanlage bereitgestellt werden.

Allerdings bildet die Windgeschwindigkeit kein direktes Maß für die durch den Wind bereitgestellte Energie, weil die für den Rotor zur Verfügung stehende Energiemenge sich deutlich unterscheiden kann, je nachdem ob der Rotor aus der betreffenden Richtung frei angeströmt wird oder ob es in dieser Richtung Elemente gibt, die den Wind abschatten.

Es ist deswegen nicht möglich, alleine aus einem auf der Windenergieanlage 14 aufgenommenen Messwert über die Windgeschwindigkeit eine zuverlässige Aussage abzuleiten, ob ein Startversuch der Windenergieanlage 14 Aussicht auf Erfolg hat.

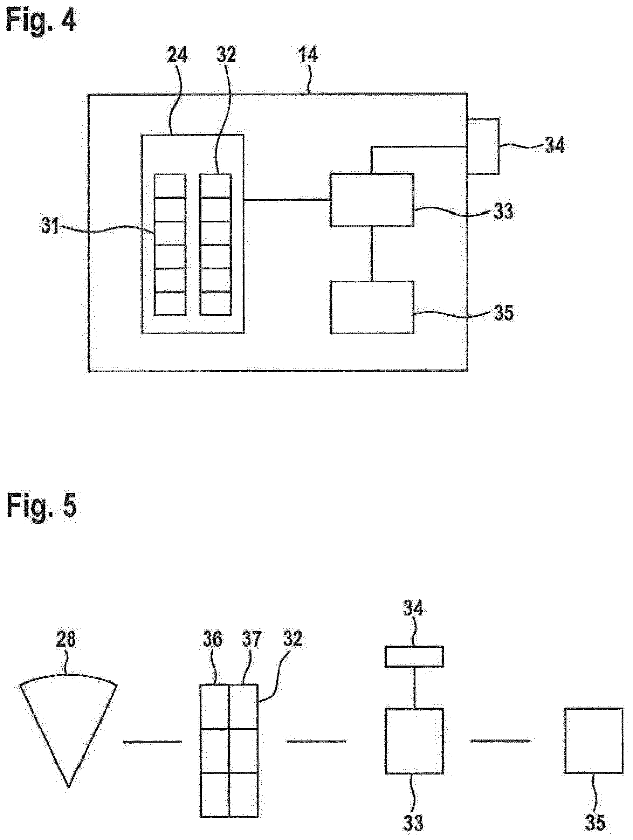

Erfindungsgemäß umfasst die Windenergieanlage 14 gemäß Fig. 4 einen Speicher 24, in dem eine Mehrzahl von Sektoren gespeichert ist, wobei die Sektorenmehrzahl 31 in ihrer Summe einen Vollkreis bildet, dessen Mitte mit dem Standort der Windenergieanlage 14 übereinstimmt, siehe Fig. 3. Die Sektoren sind so definiert, dass Windrichtungsbereiche, aus denen die Windenergieanlage 14 frei angeströmt ist, unterschieden werden von Windrichtungsbereichen, in denen die Windenergieanlage 14 einer Abschattung unterliegt. So umfasst die Sektorenmehrzahl einen Sektor 25, der auf den Wald 21 ausgerichtet ist, einen Sektor 26, der auf die benachbarte Windenergieanlage 22 ausgerichtet ist und einen Sektor 27, der in Richtung des Gebäudes 23 ausgerichtet ist. In den übrigen Sektoren 28, 29, 30 wird die Windenergieanlage 14 frei angeströmt.

In dem Speicher 24 ist für jeden Sektor aus der Sektorenmehrzahl 31 ein zugeordneter Start-Schwellwert 32 hinterlegt. Ein Startermodul 33 der Windenergieanlage 14 erhält von einer Messeinrichtung 34 Informationen über die aktuellen Windverhältnisse. Die Informationen umfassen einen Messwert über die aktuelle Windrichtung sowie einen Messwert über die aktuelle Windgeschwindigkeit. Anhand der Windrichtung kann das Startermodul 33 einen Sektor aus der Sektorenmehrzahl 31 identifizieren, in den die aktuelle Windrichtung fällt. Aus dem Speicher 24 wird dem Startermodul 33 ein zu dem betreffenden Sektor gehöriger Start-Schwellwert 32 zugeführt. Der Start-Schwellwert 32 definiert eine Windgeschwindigkeit, bei deren Überschreiten in diesem Sektor ein Startversuch eingeleitet wird. Das Startermodul 33 vergleicht den Messwert über die aktuelle Windgeschwindigkeit mit dem Start-Schwellwert 32. Sobald die aktuelle Windgeschwindigkeit den Start-Schwellwert 32 überschreitet, gibt das Startermodul 33 einen Befehl an eine Steuereinheit 35 der Windenergieanlage 14, einen Startversuch einzuleiten.

Vor dem Einleiten des Startversuchs kann der Rotor 17 der Windenergieanlage 14 im Stillstand sein. Möglich ist auch, dass der Rotor 17 vor dem Einleiten des Startversuchs bereits im Leerlauf dreht. Die Rotorblätter des Rotors 17 können auf einen festen Pitchwinkel von beispielsweise 45° eingestellt sein. Mit dem Überschreiten des Start-Schwellwerts 32 geht die Windenergieanlage 14 aus diesem passiven Zustand in einen aktiven Zustand über, in dem die Windenergieanlage 14 versucht, durch geeignetes Variieren der Pitchwinkel der Rotorblätter den Rotor zu beschleunigen. Insbesondere kann zu diesem Zweck beim Einleiten des Startversuchs ein Pitchregler aktiviert werden.

Die Start-Schwellwerte 32 sind für die einzelnen Sektoren aus der Sektorenmehrzahl 31 unterschiedlich definiert. Beispielsweise kann in einem Sektor 28, 29, 30, in dem die Windenergieanlage 14 frei angeströmt ist, ein Start-Schwellwert von 3,0 m/s Windgeschwindigkeit festgelegt sein. Hingegen kann der Start-Schwellwert 32 in dem Sektor 25, in dem die Windenergieanlage 14 durch den Wald 21 abgeschattet ist, beispielsweise auf 3,5 m/s Windgeschwindigkeit festgelegt sein. Der Windenergieanlage 14 wird also ein auf die jeweils konkreten Umgebungsbedingungen abgestimmtes Kriterium für das Einleiten einer Startversuchs zur Verfügung gestellt, wodurch die Wahrscheinlichkeit fehlerhafter Startversuche vermindert wird.

In einer Variante der Erfindung erhält das Startermodul 33 von der Messvorrichtung 34 nicht einen Messwert über die aktuelle Windgeschwindigkeit, sondern einen Messwert über die aktuelle Rotordrehzahl. Die Rotordrehzahl, die eine Windenergieanlage im Leerlauf erreicht, kann unter Umständen ein zuverlässigeres Maß für die aktuell zur Verfügung stehende Energie aus dem Wind bilden als ein auf der Gondel aufgenommener lokaler Messwert über die Windgeschwindigkeit. Ein Startversuch kann demnach eingeleitet werden, sobald die Rotordrehzahl einen für den betreffenden Sektor festgelegten Start-Schwellwert 32 der Rotordrehzahl überschreitet.

Bei dem Ausführungsbeispiel gemäß Fig. 4 ist der zu einem Sektor gehörige Start-Schwellwert 32 als Einzelkriterium ausgestaltet, indem der Start-Schwellwert 32 entweder einen Grenzwert für die Windgeschwindigkeit oder einen Grenzwert für die Rotordrehzahl definiert.

Bei einer Fortbildung der Erfindung ist der Start-Schwellwert 32 als Kombinationskriterium ausgestaltet. Es müssen also zwei Bedingungen in Kombination miteinander erfüllt sein, damit ein Startversuch der Windenergieanlage 14 eingeleitet wird. In Fig. 5 ist dies an einem Beispiel dargestellt, in dem der Start-Schwellwert 32 ein Kriterium für die Windgeschwindigkeit mit einem Kriterium für die Luftdichte kombiniert.

Der Start-Schwellwert 32 umfasst eine erste Spalte 36, in der ein Grenzwert für die Windgeschwindigkeit angegeben ist, und eine zweite Spalte 37, in der ein Grenzwert für die Luftdichte angegeben ist. Das Startermodul 33 sendet ein Startkommando an die Steuereinheit 35, wenn ein in Spalte 36 angegebenes Kriterium und ein in Spalte 37 angegebenes zugehöriges Kriterium in Kombination erfüllt sind.

In Fig. 5 sind konkret drei Möglichkeiten vorgesehen, bei denen ein Startversuch eingeleitet wird. Die erste Möglichkeit ist eine Windgeschwindigkeit von 3,0 m/s in Kombination mit einer mittleren Luftdichte, die zweite Möglichkeit ist eine Windgeschwindigkeit von 3,2 m/s in Kombination mit einer unterdurchschnittlichen Luftdichte, die dritte Möglichkeit ist eine Windgeschwindigkeit von 2,8 m/s in Kombination mit einer überdurchschnittlichen Luftdichte. Das Startermodul 33 überprüft anhand der von der Messvorrichtung 34 erhaltenen Messwerte jeweils alle drei vorgesehenen Möglichkeiten und gibt ein Startkommando, sobald für eine der Möglichkeiten beide Bedingungen erfüllt sind und damit der Start-Schwellwert im Sinne der Erfindung überschritten ist.

Bei Fig. 5 handelt es sich um ein einfaches Beispiel. Es ist möglich mehr als zwei Kriterien miteinander zu kombinieren, was bedeuten würde, dass in dem Start-Schwellwert 32 eine weitere Spalte hinzugenommen wird. Die weiteren Spalten können sich beispielsweise auf die Lufttemperatur oder die Windscherung beziehen. Ebenso ist es möglich, bei dem Start-Schwellwert 32 gemäß Fig. 5 weitere Zeilen hinzuzufügen, also mehr als drei verschiedene Bedingungskombinationen vorzusehen, bei denen ein Startversuch eingeleitet wird.

Vor der ersten Inbetriebnahme der Windenergieanlage 14 können die Grenzen der Sektoren von einem Servicetechniker in den Speicher 24 einprogrammiert werden. Die Sektorengrenzen werden vorzugsweise in Abhängigkeit von den tatsächlichen Umgebungsbedingungen definiert, denen die Windenergieanlage 14 an ihrem Standort ausgesetzt ist. Im gleichen Zuge kann der Servicetechniker für jeden Sektor aus Sektorenmehrzahl 31 einen Start-Schwellwert 32 definieren. Die betreffenden Start-Schwellwerte 32 können bei der Inbetriebnahme der Windenergieanlage 14 einmal definiert werden und dann für die Betriebsdauer Windenergieanlage 14 als feste Werte beibehalten werden.

Möglich ist auch, dass die von dem Servicetechniker einprogrammierten Start-Schwellwerte 32 lediglich als Ausgangswerte für die erste Inbetriebnahme herangezogen werden und dann im Betrieb der Windenergieanlage 14 laufend optimiert werden.

Für die Zwecke der Optimierung kann eine Durchschnittsbetrachtung beispielsweise über die letzten zehn Startversuche aus dem betreffenden Sektor vorgenommen werden, wobei die Betrachtung sich auf den niedrigsten Windgeschwindigkeitswert beziehen kann, bei dem ein erfolgreicher Startversuch durchgeführt wurde, oder auf einen mittleren Wert der Windgeschwindigkeit der erfolgreichen Startversuche. Die Optimierung kann beispielsweise so durchgeführt werden, dass bei einem Anteil erfolgreicher Startversuche oberhalb von 75 % der Start-Schwellwert 32 für den betreffenden Sektor vermindert wird, sodass eine größere Zahl von Startversuchen unternommen wird. Lag die Zahl der erfolgreichen Startversuche unterhalb von 60 %, so kann der Start-Schwellwert 32 für den betreffenden Sektor erhöht werden, sodass eine geringere Zahl von Startversuchen unternommen wird.

## Patentansprüche

1. Verfahren zum Starten einer Windenergieanlage (14) mit folgenden Schritten:
a. Auswählen eines die aktuelle Windrichtung umfassenden Sektors (28) aus einer Sektorenmehrzahl (31), wobei für den Sektor (28) ein von anderen Sektoren (25, 26, 27, 29, 30) aus der Sektorenmehrzahl (31) abweichender Start-Schwellwert (32) festgelegt ist;
b. Vergleichen eines Zustandsparameters der Windenergieanlage (14) mit dem Start-Schwellwert (32);
c. Einleiten eines Startversuchs der Windenergieanlage (14), sobald der Zustandsparameter der Windenergieanlage (14) den Start-Schwellwert (32) überschreitet.

2. Verfahren nach Anspruch 1, **dadurch gekennzeichnet, dass** die Sektorenmehrzahl (31) in ihrer Gesamtheit einen Vollkreis bildet, dessen Mittelpunkt mit dem Standort der Windenergieanlage (14) übereinstimmt.

3. Verfahren nach Anspruch 1 oder 2, **dadurch gekennzeichnet, dass** der Zustandsparameter der Windenergieanlage (14) sich auf eine Umgebungsbedingung der Windenergieanlage (14) bezieht.

4. Verfahren nach Anspruch 3, **dadurch gekennzeichnet, dass** der Zustandsparameter ein Windparameter ist.

5. Verfahren nach Anspruch 2, **dadurch gekennzeichnet, dass** der Zustandsparameter einem Betriebsparameter der Windenergieanlage (14) entspricht, insbesondere ein Maß für die Rotordrehzahl bildet.

6. Verfahren nach einem der Ansprüche 1 bis 5, **dadurch gekennzeichnet, dass** der Start-Schwellwert (32) als Kombinationskriterium ausgestaltet ist.

7. Verfahren nach einem der Ansprüche 1 bis 6, **dadurch gekennzeichnet, dass** der Startversuch der Windenergieanlage (14) eingeleitet wird, indem an der Windenergieanlage (14) eine Einstellung vorgenommen werden mit dem Ziel, den Rotor (17) auf eine zum Einspeisen elektrischer Energie ausreichende Drehzahl zu beschleunigen.

8. Verfahren nach einem der Ansprüche 1 bis 7, **dadurch gekennzeichnet, dass** der Sektor (28) ausgewählt wird, indem ein Messwert über die aktuelle Windrichtung mit einem oder mehreren Sektoren aus der Sektorenmehrzahl (31) verglichen wird.

9. Verfahren nach einem der Ansprüche 1 bis 8, **dadurch gekennzeichnet, dass** die Sektorenmehrzahl (31) in einem Speicher (24) hinterlegt ist, wobei die Sektorengrenzen frei wählbar sind.

10. Verfahren nach einem der Ansprüche 1 bis 9, **dadurch gekennzeichnet, dass** die Start-Schwellwerte (32) im Betrieb der Windenergieanlage (14) optimiert werden.

11. Verfahren nach Anspruch 10, **dadurch gekennzeichnet, dass** bezogen auf einen Sektor (28) das Verhältnis von erfolgreichen Startversuchen zu fehlerhaften Startversuchen ermittelt wird und dass der zu dem Sektor (28) gehörige Start-Schwellwert (32) angepasst wird, wenn das Verhältnis einen ersten vorgegebenen Wert überschreitet oder einen zweiten vorgegebenen Wert unterschreitet.

12. Windenergieanlage mit einem Speicher (24), in dem eine Mehrzahl (31) von Sektoren (25, 26, 27, 28, 29, 30) hinterlegt ist und in dem für jeden der Sektoren (25, 26, 27, 28, 29, 30) ein Start-Schwellwert (32) hinterlegt ist, und mit einem Startermodul (33), das anhand eines Messwerts über die aktuelle Windrichtung einen Sektor (28) aus der Sektorenmehrzahl (31) auswählt und einen Zustandsparameter der Windenergieanlage (14) mit dem Start-Schwellwert (32) des Sektors (28) vergleicht und das einen Steuerbefehl zum Einleiten eines Startversuchs auslöst, sobald der Zustandsparameter den Start-Schwellwert (32) überschreitet.

## Claims

1. Method for starting a wind turbine (14), having the following steps:
a. choosing, from a sector set (31), a sector (28) that includes the current wind direction, wherein a start threshold value (32) is established for the sector (28), this value differing from other sectors (25, 26, 27, 29, 30) from the sector set (31);
b. comparing a state parameter of the wind turbine (14) to the start threshold value (32);
c. initiating a start attempt for the wind turbine (14) as soon as the state parameter of the wind turbine (14) exceeds the start threshold value (32).

2. Method according to Claim 1, **characterized in that** the sector set (31) together forms a full circle, the centre of which coincides with the installation point of the wind turbine (14).

3. Method according to Claim 1 or 2, **characterized in that** the state parameter of the wind turbine (14) relates to an ambient condition of the wind turbine (14).

4. Method according to Claim 3, **characterized in that** the state parameter is a wind parameter.

5. Method according to Claim 2, **characterized in that** the state parameter corresponds to an operating parameter of the wind turbine (14), in particular a measurement of the rotational speed of the rotor.

6. Method according to one of Claims 1 to 5, **characterized in that** the start threshold value (32) is configured as a combination criterion.

7. Method according to one of Claims 1 to 6, **characterized in that** the start attempt for the wind turbine (14) is initiated by implementing a setting on the wind turbine (14) with the aim of accelerating the rotor (17) to a rotational speed that is sufficient for feeding in electrical energy.

8. Method according to one of Claims 1 to 7, **characterized in that** the sector (28) is chosen by comparing a measurement value regarding the current wind direction with one or more sectors from the sector set (31).

9. Method according to one of Claims 1 to 8, **characterized in that** the sector set (31) is stored in a memory (24), it being possible to freely choose the sector boundaries.

10. Method according to one of Claims 1 to 9, **characterized in that** the start threshold values (32) are optimized during operation of the wind turbine (14).

11. Method according to Claim 10, **characterized in that**, with regard to a sector (28), the ratio of successful start attempts to failed start attempts is determined, and **in that** the start threshold value (32) belonging to that sector (28) is adapted if the ratio exceeds a first predefined value or falls below a second predefined value.

12. Wind turbine having a memory (24) in which there is stored a set (31) of sectors (25, 26, 27, 28, 29, 30), and in which there is stored a start threshold value (32) for each of the sectors (25, 26, 27, 28, 29, 30), and having a starter module (33) which, using a measurement value regarding the current wind direction, chooses a sector (28) from the sector set (31) and compares a state parameter of the wind turbine (14) with the start threshold value (32) of the sector (28), and which triggers a control command for initiating a start attempt as soon as the state parameter exceeds the start threshold value (32).

## Revendications

1. Procédé de démarrage d'une éolienne (14), comprenant les étapes suivantes consistant à :
a. sélectionner un secteur (28) comprenant la direction actuelle du vent parmi une pluralité de secteurs (31), une valeur seuil de démarrage (32) déviant par rapport à d'autres secteurs (25, 26, 27, 29, 30) parmi la pluralité de secteurs (31) étant fixée pour le secteur (28) ;
b. comparer un paramètre d'état de l'éolienne (14) avec la valeur seuil de démarrage (32) ;
c. lancer une tentative de démarrage de l'éolienne (14) dès que le paramètre d'état de l'éolienne (14) dépasse la valeur seuil de démarrage (32).

2. Procédé selon la revendication 1, **caractérisé en ce que** la pluralité de secteurs (31) forme globalement un cercle complet dont le centre coïncide avec le site de l'éolienne (14) .

3. Procédé selon la revendication 1 ou 2, **caractérisé en ce que** le paramètre d'état de l'éolienne (14) fait référence à une condition ambiante de l'éolienne (14).

4. Procédé selon la revendication 3, **caractérisé en ce que** le paramètre d'état est un paramètre du vent.

5. Procédé selon la revendication 2, **caractérisé en ce que** le paramètre d'état correspond à un paramètre de fonctionnement de l'éolienne (14), étant en particulier à une mesure de la vitesse de rotation du rotor.

6. Procédé selon l'une quelconque des revendications 1 à 5, **caractérisé en ce que** la valeur seuil de démarrage (32) est configurée comme un critère combiné.

7. Procédé selon l'une quelconque des revendications 1 à 6, **caractérisé en ce que** la tentative de démarrage de l'éolienne (14) est lancée **en ce qu'**un réglage est effectué sur l'éolienne (14) dans le but d'accélérer le rotor (17) jusqu'à une vitesse de rotation suffisante pour injecter de l'énergie électrique.

8. Procédé selon l'une quelconque des revendications 1 à 7, **caractérisé en ce que** le secteur (28) est sélectionné **en ce qu'**une valeur de mesure concernant la direction actuelle du vent est comparée avec un ou plusieurs secteurs parmi la pluralité de secteurs (31).

9. Procédé selon l'une quelconque des revendications 1 à 8, **caractérisé en ce que** la pluralité de secteurs (31) est stockée dans une mémoire (24), les limites de secteur pouvant être sélectionnées librement.

10. Procédé selon l'une quelconque des revendications 1 à 9, **caractérisé en ce que** les valeurs seuil de démarrage (32) sont optimisées en cours de fonctionnement de l'éolienne (14).

11. Procédé selon la revendication 10, **caractérisé en ce que** pour un secteur (28), le rapport entre des tentatives de démarrage réussies et des tentatives de démarrage infructueuses est établi, et **en ce que** la valeur seuil de démarrage (32) associée au secteur (28) est adaptée si le rapport dépasse une première valeur prédéfinie ou soupasse une deuxième valeur prédéfinie.

12. Eolienne comprenant une mémoire (24) dans laquelle une pluralité (31) de secteurs (25, 26, 27, 28, 29, 30) est stockée, et dans laquelle une valeur seuil de démarrage (32) est stockée pour chacun des secteurs (25, 26, 27, 28, 29, 30), et comprenant un module de démarrage (33), qui sélectionne à l'aide d'une valeur de mesure, par l'intermédiaire de la direction du vent, un secteur (28) parmi la pluralité de secteurs (31) et compare un paramètre d'état de l'éolienne (14) avec une valeur seuil de démarrage (32) du secteur (28), et qui déclenche une instruction de commande pour lancer une tentative de démarrage dès que le paramètre d'état dépasse la valeur seuil de démarrage (32).
